# EUROPEAN PATENT APPLICATION

(11) **EP 4 553 301 A1**
(43) Date of publication of application: **14.05.2025**
(21) Application number: 24206325.3
(22) Date of filing: 14.10.2024
(51) Int. Cl.: F02C 3/22, F02C 6/08, F02C 7/224, F02C 9/40, F02C 3/30

(54) **GAS TURBINE ENGINE HYDROGEN FUEL SYSTEM**

(30) Priority: 13.11.2023 GB 202317341
(71) Applicant: Rolls-Royce plc, London N1 9FX (GB)
(72) Inventor: Ravikanti, Murthy, Derby, DE24 8BJ (GB); Rimmer, John, Derby, DE24 8BJ (GB); Chin, Thomas, Derby, DE24 8BJ (GB)
(74) Representative: Rolls-Royce plc

(57) **Abstract**

A fuel system (200) for a hydrogen-fuelled gas turbine engine (201) comprises a main fuel conduit (217) configured to conduct hydrogen fuel from a hydrogen storage unit (204) to a core combustor (206) of the gas turbine engine (201), a pre-heater (218) comprising an auxiliary combustor (222) configured to combust hydrogen fuel diverted from the main fuel conduit (217) to heat hydrogen fuel in the main fuel conduit (217). A first exhaust passage (228) is configured to conduct combustion products from the auxiliary combustor (222) to the core combustor (206) of the gas turbine engine (201).

## Description

### TECHNICAL FIELD

This disclosure relates to fuel systems for hydrogen-fuelled aero gas turbine engines, propulsive gas turbine engines suitable for aircraft comprising the pumping system, and methods of operation of such fuel systems and engines.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or as a liquid.

The applicant has previously filed European patent application EP 3978738 A1 directed toward a fuel system for such a gas turbine engine.

### SUMMARY

In a first aspect there is provided a fuel system for a hydrogen-fuelled gas turbine engine comprising:
a main fuel conduit configured to conduct hydrogen fuel from a hydrogen storage unit to a core combustor of the gas turbine engine;
a pre-heater comprising an auxiliary combustor configured to combust hydrogen fuel diverted from the main fuel conduit to heat hydrogen fuel in the main fuel conduit; and
a first exhaust passage configured to conduct combustion products from the auxiliary combustor to the core combustor of the gas turbine engine.

The inventors have found that emissions of Oxides of Nitrogen (NOx) can be reduced by the provision of exhaust gases from the auxiliary combustor to the core combustor of the gas turbine engine. Further features and benefits of the disclosed arrangement are described below.

The gas turbine engine combustor may comprise at least one fuel injector configured to provide hydrogen fuel to the core combustor.

The or each fuel injector may comprise a feed-arm configured to provide fuel to a fuel spray nozzle of the injector.

The feed-arm may comprise a first passage configured to conduct hydrogen fuel to the fuel spray nozzle, and a second passage configured to conduct auxiliary combustor exhaust gases to the fuel spray nozzle. Advantageously, a single feed-arm can be utilised to conduct both auxiliary combustor exhaust and hydrogen fuel to the fuel spray nozzle.

The first passage may be in thermal communication with the second passage, such that heat from the auxiliary combustor exhaust gases is transmitted to the fuel within the first passage. Advantageously, the relatively cold hydrogen fuel is warmed by the relatively warm auxiliary combustor exhaust gases. As such, temperature differences between the relatively hot fuel spray nozzle and otherwise relatively cool hydrogen fuel are minimised, thereby reducing thermal stresses.

The first and second passages may be coaxial, with the first passage being provided within the second passage. As such, thermal contact between the relatively hot feed-arm walls and relatively cold hydrogen fuel is prevented, with the intermediate temperature auxiliary combustor exhaust providing a buffer.

The fuel system may comprise a heat exchanger configured to exchange heat between hydrogen fuel in the main fuel conduit, and auxiliary combustor exhaust gases. The heat exchanger may be provided upstream of the main gas turbine engine combustor in auxiliary combustor exhaust gas flow and main conduit hydrogen flow. Advantageously, the hydrogen is heated, and the auxiliary combustor exhaust gases are cooled prior to delivery to the main gas turbine engine combustor.

The injector may comprise a plurality of spray nozzles. A first set of spray nozzles may be in fluid communication with the first passage, and a second set of spray nozzles may be in fluid communication with the second passage.

The second set of spray nozzles may be provided at least part annularly around the first set of spray nozzles. Accordingly, the auxiliary combustor gas provides a buffer between the hydrogen fuel flow and hot combustor air flow. In view of the reduced oxygen content in the auxiliary combustor exhaust gases relative to the main gas turbine engine combustor entry flow, this may locally increase the fuel-oxygen ratio adjacent the hydrogen spray nozzles, thereby reducing NOx emissions.

The auxiliary combustor may comprise a second exhaust passage configured to direct auxiliary combustor exhaust flow to a second outlet, bypassing the gas turbine engine core combustor. The fuel system may comprise an exhaust valve configured to control exhaust flow through the first exhaust passage. Advantageously, auxiliary combustor exhaust gases can be selectively provided to the gas turbine engine core combustor flow, or bypass the core combustor, to provide improved emissions control.

According to a second aspect there is provided a gas turbine engine comprising a fuel system in accordance with the first aspect.

According to a third aspect there is provided a method of operating a fuel system of a hydrogen fuelled gas turbine engine comprising:
operating a core combustor to combust hydrogen fuel in a core compressor air flow;
diverting a portion of hydrogen fuel flow upstream of the core combustor in hydrogen fuel flow, and combusting the diverted portion in an auxiliary combustor; and
directing an exhaust of the auxiliary combustor through a first exhaust passage to the core combustor of the gas turbine engine.

The method may comprise operating a valve configured to control flow the first exhaust passage.

The method may comprise controlling the valve such that a main gas turbine engine NOx emissions target is met.

The method may comprise operating the auxiliary combustor such that a main gas turbine engine NOx emissions target is met.

According to a fourth aspect of the invention there is provided a control system configured to operate the fuel system in accordance with the method of the third aspect.

### BRIEF DESCRIPTION OF THE DRAWINGS

Embodiments will now be described by way of example only with reference to the accompanying drawings, which are purely schematic and not to scale, and in which:
Figure 1 shows a hydrogen-fuelled airliner comprising hydrogen-fuelled turbofan engines;
Figure 2 is a block diagram of one of the engines of Figure 1 comprising a fuel system;
Figures 3a and 3b are a side view and a cross-sectional view from above respectively of an injector of the engine of figure 2;
Figures 4 and 5 are side views of first and second alternative injectors for the engine of figure 2;
Figure 6 is a front view of a spray nozzle of an injector for the gas turbine engine of figure 2;
Figures 7a to 7c are alternative designs for the region B of the spray nozzle of figure 6; and
Figures 8 and 9 are side views of third and fourth alternative designs respectively of an injector for the engine of figure 2.

### DETAILED DESCRIPTION

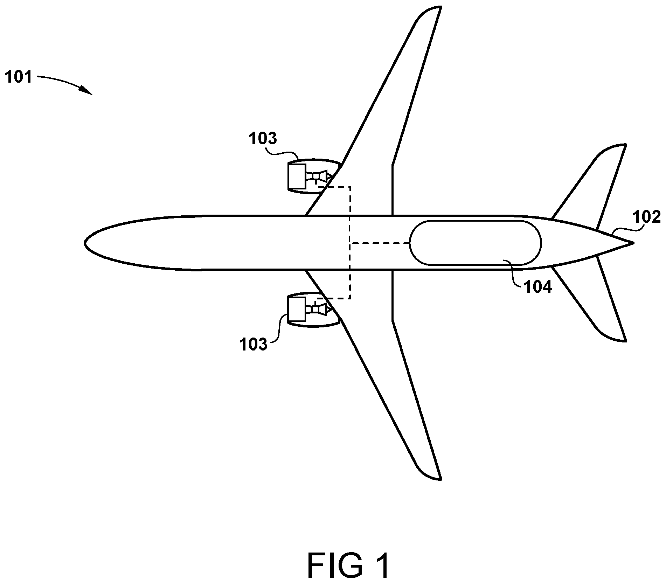

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103.

A hydrogen storage tank 104 is located in the fuselage 102. In the present embodiment, the hydrogen storage tank 104 is a cryogenic hydrogen storage tank and thus stores the hydrogen fuel in a liquid state, in a specific example at 22 Kelvin. In this example, the hydrogen fuel is pressurised to a pressure from around 1 bar to around 5 bar, in a specific example 4 bar. Alternatively, the hydrogen storage tank could store hydrogen fuel in a sub-cooled, high pressure gaseous or supercritical state.

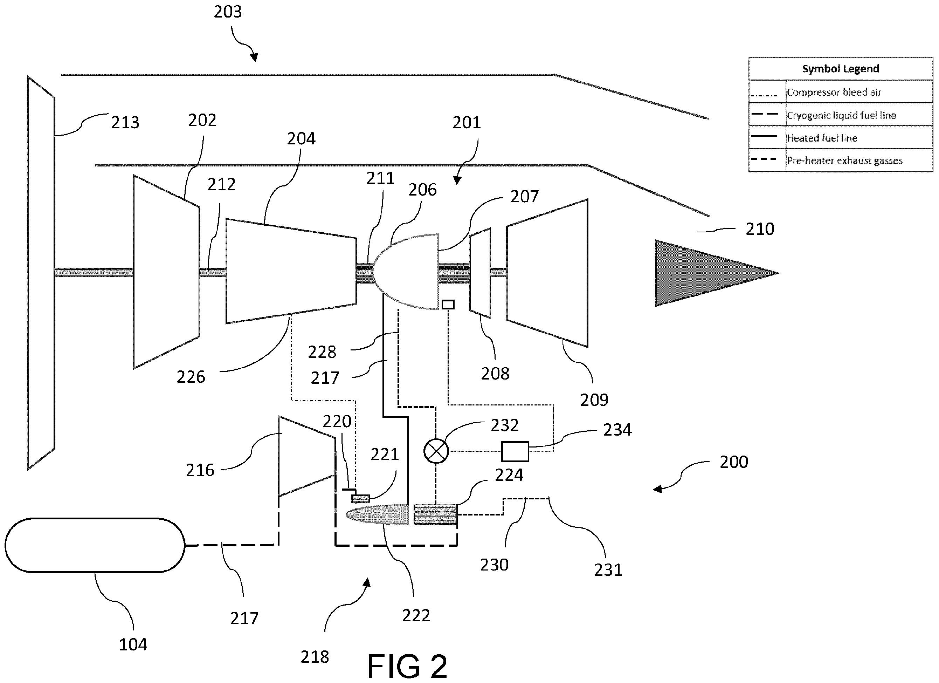

A block diagram of one of the turbofan engines 103 is shown in Figure 2.

The turbofan engine 103 comprises a core gas turbine 201.

The core gas turbine 201 comprises, in fluid flow series, a low-pressure compressor 202, a high-pressure compressor 204, a core gas turbine combustion system 206, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212.

In operation, the low-pressure turbine 209 drives a fan 213 via shaft 212. It will be appreciated that in alternative embodiments, the core gas turbine could be of three-shaft configuration, and / or could comprise a reduction gearbox between the low-pressure turbine and fan.

In operation, hydrogen fuel is pumped from the hydrogen storage tank 104 by a pump 216 and into a main fuel conduit 217 which ultimately delivers fuel to the fuel injection system 206. The pump 216 may be driven by an electric machine or via one or more of the gas turbine engine core shafts 211, 212 via an auxiliary gearbox (not shown).

As will be appreciated, it is desirable to increase the temperature of the fuel from the 22 Kelvin cryogenic storage condition to a temperature much closer to the firing temperature of the core gas turbine 201; of course this is subject to the constraint of not exceeding the autoignition temperature of the hydrogen fuel prior to admission into the combustor 207. Where the fuel is stored as a supercritical fluid or gas, the storage temperature will be higher, but will typically still be significantly below the freezing point of water (273 Kevin, i.e. at cryogenic temperatures). In an example, the injection temperature is from 250 to 300 kelvin, for example 250 kelvin. In some cases, it may be desirable to increase the fuel temperature to above an icing temperature, such as 273 Kelvin.

In the present embodiment, a pre-heater 218 is therefore provided for heating of the hydrogen fuel, and possibly to implement a phase change where the hydrogen is stored as a liquid. In the present embodiment, this takes place between the pump 216 and the gas turbine engine core combustion 206. In an embodiment, the heater 218 is configured to raise the temperature of the hydrogen fuel to the required injection temperature.

The pre-heater 218 is part of a fuel system 200 for the gas turbine engine. The pre-heater 218 comprises an offtake 220, which diverts a portion of hydrogen fuel from the main fuel conduit 217 to an auxiliary combustor 222 of the pre-heater.

As described previously, hydrogen has very high specific and latent heat capacities; however as a gas it has a very low molecular weight and density, and thus it can be challenging to exchange heat in a compact way. Thus, the heater 218 heats the hydrogen fuel in the main fuel conduit 217 by combustion of the bled fuel in the auxiliary combustor 222 located in heat exchange relationship with the main fuel conduit 217 via a heat exchanger 224. As will be understood, fuel for the auxiliary combustor 222 must also be provided at an acceptable temperature, and a smaller auxiliary fuel heater 221 may be provided for this.

In order to reduce the volume of the auxiliary combustor 222, it is desirable to use a high-pressure source of air, which provides sufficient mass-flow in a small volume to combust the hydrogen fuel. As such, air for combustion with the bled hydrogen fuel is bled from a compressor of the gas turbine engine core, and in this embodiment, from the high-pressure compressor 204. Air is bled from the high-pressure compressor 204 from a compressor bleed 226. Alternatively, air may be bled from the low-pressure compressor 202.

A heat exchanger 224 is provided in thermal communication with combustor exhaust gases of the auxiliary combustor 222 and hydrogen fuel in the main fuel conduit 217. As such, fuel in the conduit 217 is heated by auxiliary combustor exhaust gases, and the auxiliary combustor exhaust gases are cooled by the fuel. Typically, the hydrogen is heated to around 273K or slightly higher in this process, to both gasify the fuel, and reduce the risk of ice forming in or around the fuel line. in some embodiments, the separate heat exchanger 224 may be omitted, with all heat exchange occurring downstream.

Both heated fuel from the main fuel conduit 217, and auxiliary combustor 222 exhaust gases are provided to the main core combustor 206 of the gas turbine engine via one or more fuel injectors 302. Fuel is provided via the main fuel conduit 217, and exhaust gases are provided via a first auxiliary combustor exhaust gas conduit 228.

Optionally, the arrangement may comprise a second auxiliary combustor exhaust gas conduit 230, which is provided downstream of the heat exchanger 224 in auxiliary combustor exhaust gas flow, and bypasses the main engine core combustor 206. The second auxiliary exhaust gas conduit 230 may direct exhaust gases to a position downstream of the combustor 206 of the main gas turbine engine core 201, such as the turbines 208, 209 or nozzle 210. Alternatively, the second auxiliary combustor exhaust gas conduit 230 may direct gases to the engine bypass duct, or a separate exhaust duct.

Where the arrangement comprises an auxiliary combustor exhaust gas conduit 230, a valve 232 can be provided, which controls auxiliary combustor exhaust gas flow through the first conduit 228. As such, a mass flow of exhaust gases delivered to the combustor 206 can be controlled, with the valve 232 being controlled by an electronic controller 234. As will be understood, flow may alternatively be controlled by a valve (not shown) in the conduit 230, or by a valve configured to switch flow between these conduits.

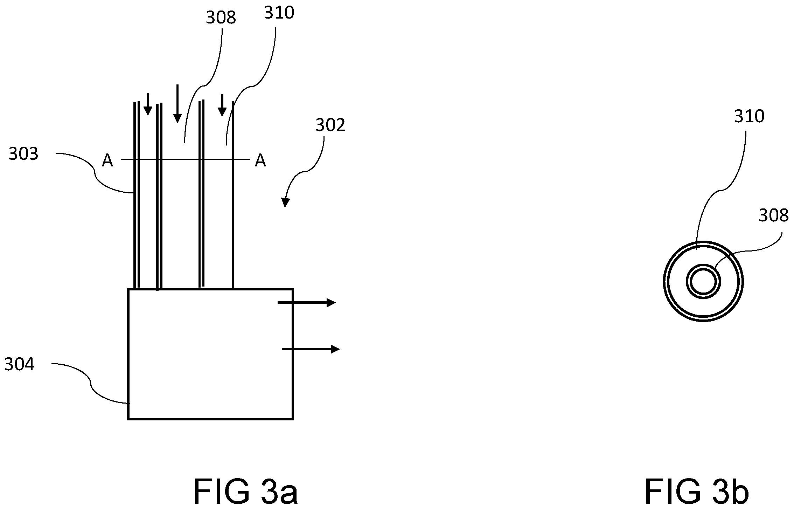

Figures 3a and 3b illustrate one of the fuel injectors 302 in more detail. Typically, a plurality of fuel injectors 302 are provided, distributed about the core combustor 206, though only one is shown in figures 3a and 3b.

Figure 3a shows a cross-sectional view from a side of the injector 302, while figure 3b shows a cross sectional view along the line A-A of figure 3a. As shown in figure 3a, each fuel injector 302 comprises a fuel feed-arm 303, which extends from a combustor outer casing (not show) to a fuel spray tip 304, where fuel is injected into the combustor core air flow for combustion.

The fuel feed-arm 303 comprises a first passage 308 which is in communication with the main fuel conduit 217 downstream of the heat exchanger 224, and so is configured to provide heated hydrogen to the fuel spray tip 304.

The fuel feed-arm 303 further comprises a second passage 310 which is in fluid communication with the auxiliary combustor 222 exhaust, downstream of the heat exchanger 224. In the present embodiment, the second passage 310 is in communication with the auxiliary combustor 222 exhaust downstream of the heat exchanger 224. By providing the second passage 310 downstream of the heat exchanger 224, the gases entering the second passage are relatively cooler. This increases the heat absorbing capacity of the gases, which helps reduce NOx.

In some embodiments however, the second passage 310 may be provided with hotter exhaust gases directly from the auxiliary combustor exhaust, upstream of the heat exchanger 224.

In the present embodiment, the first and second passages 308, 310 are provided coaxially, with the second passage 310 being provided circumferentially around the first passage 308. As such, the relatively warmer combustor exhaust gases provided a buffer between the still relatively cold (in some cases, around 270 K) hydrogen fuel delivered to the injector 302, and the high temperature gases (up to 2600 K) within the combustor 206. As such, thermal stresses within the injector 302 are reduced. Additionally, in the event of a leak of hydrogen flow from the first passage, the hydrogen leaks into the relatively cooler, de-oxygenised auxiliary combustor exhaust flow, rather than directly into the combustor air flow. Consequently, fire risk is reduced.

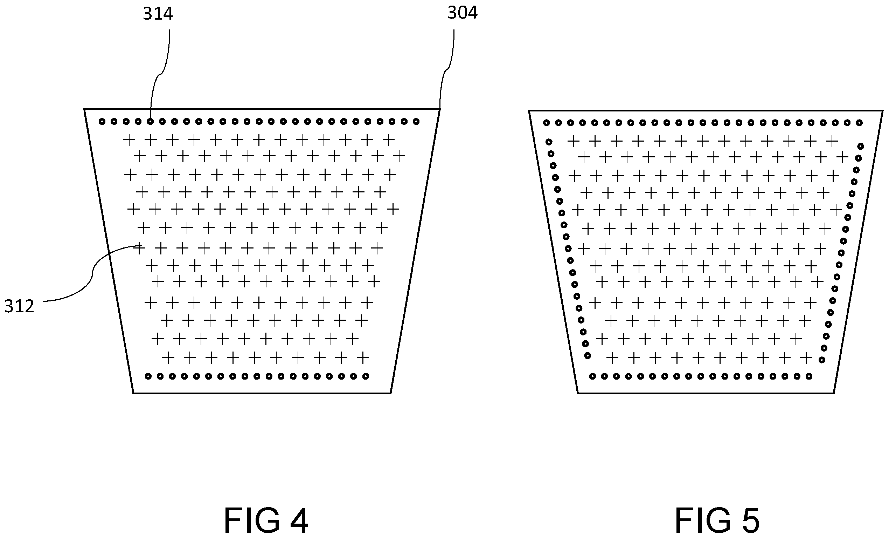

Figure 4 shows the fuel spray tip 304 in more detail. As can be seen, first and second sets of spray nozzles 312, 314 are provided, which communicate with the first and second passages 308, 310 respectively. The first set of spray nozzles 312 are shown as crosses in figure 4, while the second set of spray nozzles are shown as circles 314, though it will be understood that this is representative, and the shape of the nozzles will be different to that shown in the figures. The second set of nozzles 314 are provided at a periphery of the fuel spray tip 304, and so partly surround the first nozzles 312 such that hydrogen fuel emerging from the first spray nozzle 312 is shielded by exhaust gases from the second nozzle 314. Typically, the spray tip 304 will be arrayed annularly around the combustor 206, with the spray tips 304 being tessellated. As such, fuel emanating from the first set of nozzles 312 may be shielded from combustor gases by hydrogen flow from adjacent spray tips 312, or auxiliary combustor exhaust gases from the second set of nozzles 314.

Since the exhaust gases from the auxiliary combustor 222 have essentially no, or minimal fuel content, and are de-oxygenised relative to the compressor delivery air present in the core combustor 206, the fuel-oxygen ratio of the gases adjacent the fuel spray tip 304 is increased. This in turn reduces the temperature of exhaust gases, which results in reduce NOx formation. Additionally, since the exhaust gases from the auxiliary combustor 222 principally comprises steam, this will generally reduce the flame temperature and hence thermal NOx in the core combustor 206.

Figure 5 shows an alternative arrangement of a fuel spray tip 504, in which the sets of fuel spray nozzles 512, 514 are arranged differently. In this embodiment, the second set of spray nozzles 514 are provided arrayed around the whole periphery of the fuel spray tip 514, such that all of the first set of nozzles 512 are shielded by the second set of nozzles 514. As such, NOx emissions may be reduced to a greater degree. Alternatively, this may permit the fuel spray tips 504 to be spaced from one another to a greater extent than the design in figure 4.

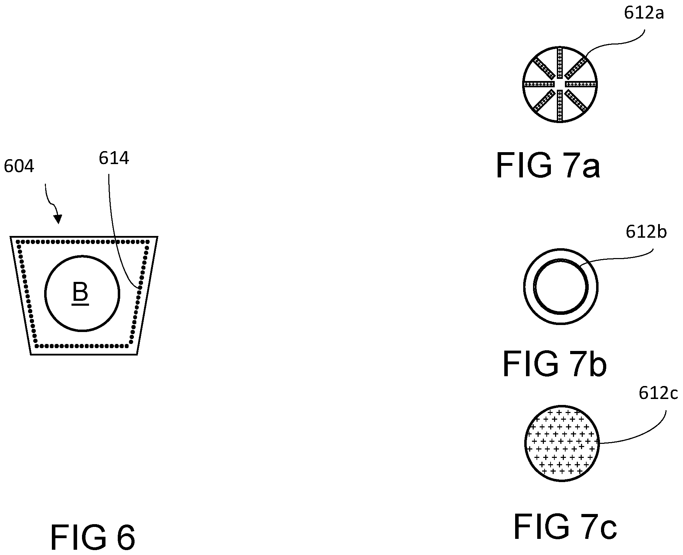

Figure 6 shows a further alternative arrangement of fuel spray tip 604, with figures 7a, 7b and 7c showing alternative arrangements of the part B of the fuel spray tip 604 shown in figure 6.

The fuel spray tip 604 comprises a second set of nozzles 614 similar to the nozzles 314, 514, which provide auxiliary combustor 222 exhaust gases, and surround a first set of nozzles 612 provided in a central area B, which provides fuel to the core combustor 206.

Figures 7a, 7b and 7c show different arrangements of the area B, in which the first set of nozzles 612 are provided.

In the arrangement of figure 7a, a first set of nozzles 612a are provided, with a plurality of nozzles 612a arranged in a spoked pattern.

In the arrangement of figure 7b, a single annular nozzles 612b is provided.

In the arrangement of figure 7c, a plurality of evenly spaced nozzles 612c are provided, spaced throughout the region B.

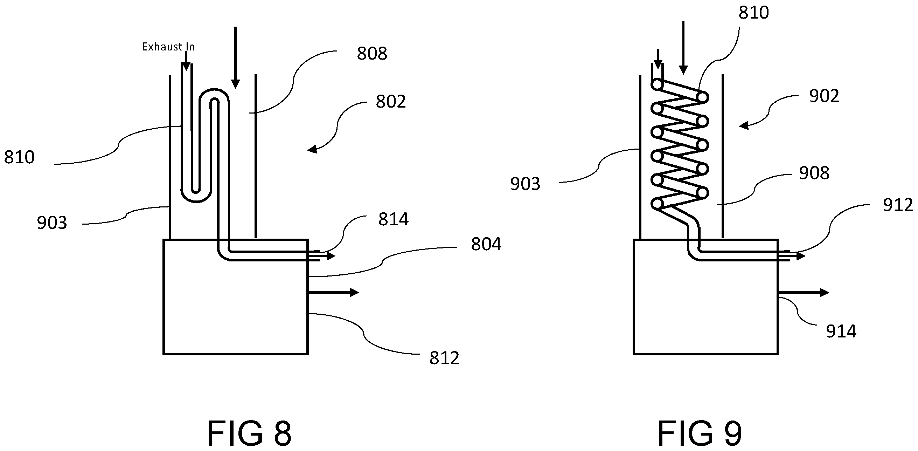

Figures 8 and 9 show first and second alternative respective arrangements for the fuel feed-arm of fuel injectors 802, 902.

In figure 8, a fuel feed-arm 803 is provided having first and second passages 808, 810, which are configured to provide hydrogen fuel and auxiliary combustor exhaust gases respectively, in a similar manner to the arrangement of figures 3a and 3b.

However, in these embodiments, the second passage 810 takes an indirect route through the feed-arm 803, to increase the residence time of auxiliary combustor exhaust within the feed-arm 803, and increase the surface area of the contact between the first and second passages 808, 810. As such, more effective heat exchange between the exhaust gases and hydrogen fuel takes place, thereby further increasing the temperature of the hydrogen fuel, and reducing the temperature differential between the hydrogen fuel in the feed-arm 803 and combustor gases.

In the embodiment of figure 8, the second passage 810 comprises a folded passage 810, which doubles back on itself before returning toward the first and second sets of nozzles 812, 814.

In the embodiment of figure 9, an injector 902 is provided. A feed-arm 903 has a second passage 910 in the form of a coiled passage, which again serves to increase both the residence time and surface area, thereby increasing heat exchange effectiveness between hydrogen in the first passage 908 and exhaust gases in the second passage 910. In each case, first and second sets of nozzles 912, 914 are again provided.

Whichever arrangement is used, the system may be controlled by a controller 234 (shown in figure 2), in accordance with a control method configured to maintain NOx emissions below a target level. In one embodiment, the controller 234 is configured to control the valve 232 in accordance with a schedule such that target emissions are met. In a further example, the valve 232 can be controlled in accordance with closed loop control, with a sensor 236 located within the combustor 206 or downstream thereof, such as in the turbine 208, 209 or nozzle 210, configured to either directly or indirectly determine NOx emissions, and control the valve 232 accordingly. In general, opening the valve 232 to allow greater pre-heater exhaust gases into the core combustor 206 will reduce NOx emissions, while closing the valve 232 will increase emissions. On the other hand, reducing oxygen levels within the core combustor 206 may reduce engine core power or affect efficiency. Consequently, it is desirable to be able to control the degree of exhaust gases entering the combustor 206.

In some cases, the pre-heater auxiliary combustor 222 may be controlled in accordance with a schedule that takes into account main combustor 206 NOx emissions. For example, while the pre-heater 218 is primarily provided to ensure the hydrogen delivered to the main gas turbine engine is at a sufficient temperature for combustion, the controller 234 may control the pre-heater to provide additional exhaust gases where required for NOx emissions control. Consequently, in one embodiment, the controller 234 controls the pre-heater 218 such that both a minimum hydrogen delivery temperature and a maximum gas turbine engine NOx emissions target are met. Generally, increasing fuel delivery to the pre-heater will both increase hydrogen delivery temperature and reduce NOx emissions, in combination with opening the valve 232. In some cases, a control scheme incorporating a combination of the above two control schemes may be utilised.

Accordingly, the disclosed arrangement provides an effective means of both reducing engine emissions, and reducing thermal gradients between the fuel passage and stresses within the combustor. The disclosed arrangement may also increase safety, by reducing fire hazards.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

## Claims

1. A fuel system (200) for a hydrogen-fuelled gas turbine engine (201) comprising:
a main fuel conduit (217) configured to conduct hydrogen fuel from a hydrogen storage unit (204) to a core combustor (206) of the gas turbine engine (201);
a pre-heater (218) comprising an auxiliary combustor (222) configured to combust hydrogen fuel diverted from the main fuel conduit (217) to heat hydrogen fuel in the main fuel conduit (217); and
a first exhaust passage (228) configured to conduct combustion products from the auxiliary combustor (222) to the core combustor (206) of the gas turbine engine (201).

2. A fuel system according to claim 1, wherein the gas turbine engine combustor comprises at least one fuel injector (302) configured to provide hydrogen fuel to the core combustor (206), each fuel injector (302) comprising a feed-arm (303) configured to provide fuel to a fuel spray nozzle (304) of the injector (302).

3. A fuel system according to claim 2, wherein the feed-arm (303) comprises a first passage (308) configured to conduct hydrogen fuel to the fuel spray nozzle (304), and a second passage (310) configured to conduct auxiliary combustor exhaust gases to the fuel spray nozzle (304).

4. A fuel system according to claim 3, wherein the first passage (308) is in thermal communication with the second passage (310), such that heat from the auxiliary combustor exhaust gases is transmitted to the fuel within the first passage (308), and wherein the first and second passages (308, 310) may be coaxial, with the first passage (308) being provided within the second passage (310).

5. A fuel system according to any of the preceding claims, wherein the fuel system (201) comprises a heat exchanger (222) configured to exchange heat between hydrogen fuel in the main fuel conduit (217), and auxiliary combustor exhaust gases.

6. A fuel system according to claim 5, wherein the heat exchanger (222) is provided upstream of the main gas turbine engine combustor (206) in auxiliary combustor exhaust gas flow and main conduit hydrogen flow.

7. A fuel system according to claim 2 or any claim dependent thereon, wherein the or each injector (302) comprises a plurality of spray nozzles (312, 314), and wherein the or each injector may comprise a first set of spray nozzles (312) in fluid communication with the first passage (308), and a second set of spray nozzles (314) in fluid communication with the second passage (310).

8. A fuel system according to claim 7, wherein the second set of spray nozzles (314) is provided at least part annularly around the first set of spray nozzles (312).

9. A fuel system according to any of the preceding claims, wherein the auxiliary combustor (222) comprises a second exhaust passage (230) configured to direct auxiliary combustor exhaust flow to a second outlet (231), bypassing the gas turbine engine core combustor (206).

10. A fuel system according to any of the preceding claims, wherein the fuel system (201) comprises an exhaust valve (232) configured to control exhaust flow through the first exhaust passage (228).

11. A gas turbine engine (201) comprising a fuel system (2001) in accordance with any of the preceding claims.

12. **A** method of operating a fuel system of a hydrogen fuelled gas turbine engine (201) comprising:
operating a core combustor (206) to combust hydrogen fuel in a core compressor air flow;
diverting a portion of hydrogen fuel flow upstream of the core combustor (206) in hydrogen fuel flow, and combusting the diverted portion in an auxiliary combustor (222); and
directing an exhaust of the auxiliary combustor (222) through a first exhaust passage to the core combustor (206) of the gas turbine engine (201).

13. A method according to claim 15 wherein the method comprises operating a valve (232) configured to control flow through the first exhaust passage, and wherein the method may compris controlling the valve (232) such that a main gas turbine engine NOx emissions target is met.

14. A method according to claim 13, wherein the method comprises operating the auxiliary combustor (222) such that a main gas turbine engine NOx emissions target is met.

15. A control system configured to operate the fuel system in accordance with any of claims 12 to 14.
